Europäisches Patentamt

(19) European Patent Office

Office européen des brevets

(11) **EP 1 200 242 B1**

(12) **EUROPÄISCHE PATENTSCHRIFT**

(45) Veröffentlichungstag und Bekanntmachung des Hinweises auf die Patenterteilung:
**02.07.2003 Patentblatt 2003/27**

(51) Int Cl.$^7$: **B29C 47/92**, B29C 47/16, A21C 11/16

(21) Anmeldenummer: **00958377.4**

(22) Anmeldetag: **03.08.2000**

(86) Internationale Anmeldenummer:
**PCT/EP00/07550**

(87) Internationale Veröffentlichungsnummer:
**WO 01/010629 (15.02.2001 Gazette 2001/07)**

(54) **VORRICHTUNG ZUM EXTRUDIEREN PLASTISCHER MASSEN**

DEVICE FOR EXTRUDING PLASTIC MATERIALS

DISPOSITIF POUR L'EXTRUSION DE PRODUITS PLASTIQUES

(84) Benannte Vertragsstaaten:
**AT BE CH CY DE DK ES FI FR GB GR IE IT LI LU MC NL PT SE**

(30) Priorität: **05.08.1999 DE 19936827**

(43) Veröffentlichungstag der Anmeldung:
**02.05.2002 Patentblatt 2002/18**

(73) Patentinhaber: **Hosokawa Bepex GmbH 74211 Leingarten (DE)**

(72) Erfinder:
- **NOLLER, Markus**
  **74211 Leingarten (DE)**
- **ALTVATER, Frank**
  **D-74074 Heilbronn (DE)**
- **STÄDLER, Gerhard**
  **D-74226 Nordheim (DE)**

(74) Vertreter: **Goetz, Rupert, Dipl.-Ing. Wuesthoff & Wuesthoff Patent- und Rechtsanwälte Schweigerstrasse 2 81541 München (DE)**

(56) Entgegenhaltungen:
| | |
|---|---|
| DE-A- 4 314 728 | DE-A- 4 405 552 |
| DE-A- 4 433 593 | US-A- 3 945 538 |
| US-A- 4 478 775 | US-A- 5 855 927 |

- **DATABASE WPI Section Ch, Week 199546 Derwent Publications Ltd., London, GB; Class A32, AN 1995-354753 XP002154079 & JP 07 241900 A (BRIDGESTONE CORP), 19. September 1995 (1995-09-19)**
- **PATENT ABSTRACTS OF JAPAN vol. 1995, no. 02, 31. März 1995 (1995-03-31) & JP 06 320604 A (SEKISUI CHEM CO LTD), 22. November 1994 (1994-11-22)**

**Beschreibung**

Die Erfindung betrifft eine Vorrichtung zum Extrudieren plastischer Massen mit den im Oberbegriff des Anspruchs 1 genannten Merkmalen.

Backwaren und Süßwaren werden oftmals durch Extrudieren einer plastischen Teig- bzw. Zucker/Fett-Masse hergestellt. Dabei wird die unter Druck gesetzte Masse durch eine Düse zu einem Strang ausgepreßt. Der Strang kann als solcher geschnitten und/oder durch ein Transportband abgeführt werden. Die äußere Gestalt des Strangs ist von der Form der Düse und insbesondere von der Austrittsgeschwindigkeit der Masse aus der Düse abhängig. Schwankt die Austrittsgeschwindigkeit der Masse, so sind die geschnittenen Strangabschnitte unterschiedlich lang, oder der Strang auf dem abführenden Transportband ist ungleichmäßig dick geformt.

Aus DE-A-44 33 593 ist ein Verfahren zum Regeln eines Extruders für Lebensmittel bekannt, bei dem zwischen einer Schneckenspitze und einer Düse ein Viskositätssensor installiert ist, der Meßgrößen, wie die Produkttemperatur, den Druck vor der Düse, die spezifische mechanische Energieeinleitung, insbesondere die viskosen Eigenschaften, und gegebenenfalls auch die Verweilzeit, bestimmt. Ziel des Verfahrens ist es, den Arbeitspunkt des Extruders zu optimieren und zu stabilisieren. Als Stellgrößen werden dazu die Drehzahl, der Massestrom und der Wassergehalt genannt. Um den optimalen Arbeitspunkt zu finden, werden zunächst Wirkzusammenhänge zwischen den Stellgrößen und Produktkriterien, wie Farbe, Löslichkeit oder Expansionsgrad, durch Abfahren verschiedener Konfigurationen am Extruder ermittelt. Nachfolgend werden unter Verwendung der Meßgrößen des Viskositätssensors drei weitere Regelstufen durchlaufen.

Aus WO 89/04610 sind ein Verfahren und eine Anlage zum Herstellen von Teig bekannt, bei der ein Wirbelmischer trockene Komponenten mit Wasser vermischt und im freien Fall direkt in einen Kneter führt. Der Kneter gibt geformte Krümel gleichmäßig an zwei Preßschnecken ab, wobei die jeweilige Zuspeisung zu den einzelnen Preßschnecken aufgrund der Motorleistungsaufnahme in Abhängigkeit des Druckes in einem Preßkopf gesteuert wird. Um einen Stau von Krümeln vor den Preßschnecken zu verhindern, weisen diese eine größere Förderleistung als der Kneter auf. Damit in der Preßschnecke keine Lufteinschlüsse entstehen, muß zwischen dem Kneter und der Preßschnecke ein Vakuumraum angeordnet sein.

Aus DE-A-22 15 449 und DE-A-43 14 728 ist je eine Walzenpresse zum Auspressen plastischer Massen mit zwei gegenläufig drehbaren Walzen bekannt. Die Walzen weisen Förderleisten auf, die mit den Walzen umlaufen und dabei die Masse in eine Druckkammer fördern. Die Masse wird von den Walzen an je einem Abstreifer getrennt und strömt aus der Druckkammer zu Austrittsdüsen. Eine derartige Walzenpresse fördert die plastische Masse pulsierend, da die Masse durch die Förderleisten stärker gefördert wird als in den Räumen zwischen zwei Förderleisten. Durch die pulsierende Förderung kommt es zu einer schwankenden Austrittsgeschwindigkeit der Masse aus den Austrittsdüsen.

Aus JP-A-6320604 ist ein Extrusionsverfahren und eine Extrusionseinrichtung für aus Kunstharz gespritzte Teile bekannt, bei dem die Schwankung des Verdichtungsdrucks einer Zahnradpumpe durch eine von der Zahnradpumpe stromabwärts angeordnete Gießvorrichtung absorbiert wird.

Aus JP-A-7241900 ist ein Steuerverfahren zum Unterdrücken von Pulsation an einem Extruder bekannt, bei dem der Antriebsmotor eines Transportbands zum Abführen eines extrudierten Teiles im Hinblick auf die Länge des Teiles gesteuert wird.

Unter Teigmasse versteht man eine Mischung unterschiedlicher Backsubstanzen. Diese reagieren im Laufe der Zeit derart miteinander, daß die Teigmasse nicht mehr richtig ausgebacken werden kann. Man spricht vom "Überaltern" der Teigmasse. Eine Teigmasse kann daher nur während einer bestimmten Zeit nach dem Mischen verarbeitet werden.

Ferner ist es beim Verarbeiten einer Teigmasse wichtig, daß diese keinen großen Scherkräften ausgesetzt wird. Durch große Scherkräfte wird die Haftung der Substanzen aneinander aufgehoben und einzelne Substanzen, wie beispielsweise Hefekulturen, werden geschädigt. Die Zusammensetzung der Teigmasse ist dadurch zerstört.

Bei einer Zucker/Fett-Masse kann es durch große Scherkräfte in der Masse zur Absonderung von Fett kommen. Die Zusammensetzung der Zucker/Fett-Masse ist dadurch ebenfalls zerstört. Die gewünschte Süßware ist dann nicht mehr herstellbar.

Aufgabe der Erfindung ist es, eine Vorrichtung zum Extrudieren plastischer Massen vorzusehen, bei der die oben genannten Nachteile vermieden sind.

Die Aufgabe ist erfindungsgemäß durch eine Vorrichtung mit den Merkmalen des Anspruchs 1 gelöst.

Beim Extrudieren von Teig- oder Zucker/Fett-Massen werden Walzenpressen eingesetzt, die konstruktionsbedingt einen oszillierenden Förderdruck bereitstellen. Ferner kommt es bei drehbaren Düsen ebenfalls zu einer oszillierenden Schwankung des Strömungswiderstandes der Masse in der Düse. Erfindungsgemäß sind die beiden oszillierenden Größen derart aufeinander abgestimmt, daß sich eine im wesentlichen konstante Ausströmgeschwindigkeit der Masse aus der Düse ergibt. Alternativ kann bei einer sich nicht drehenden Düse eine Einrichtung vorgesehen sein, die den Strömungswiderstand der Düse abgestimmt mit dem schwankenden Förderdruck der Zuführeinrichtung verändert, so daß ebenfalls eine im wesentlichen konstante Ausströmgeschwindigkeit der Masse erzielt wird.

Teigmasse ist eine elastoviskose Masse (Maxwell Medium) die sowohl zähflüssig (newtonsche Flüssigkeit) als auch elastisch (elastischer Körper) sein kann. So verfestigt sich die zähflüssige Teigmasse beispielsweise während des Backens, was selbstverständlich erwünscht ist. Ferner verfestigt sich die Teigmasse aber auch während der Zeit der Verarbeitung. Es kann daher aus der Zähigkeit oder Viskosität der Teigmasse rückgeschlossen werden, ob die Teigmasse noch weiter verarbeitet werden kann bzw. soll. Durch die Sensiereinrichtung der erfindungsgemäßen Vorrichtung kann demnach in einfacher Weise erkannt werden, daß eine Teigmasse in der Vorrichtung zum Extrudieren "überaltert" ist. Bisher ist dies erst an einem nachgeschalteten Ofen erkannt worden, so daß dazwischen größere Mengen Ausschuß hergestellt worden sind.

Das in einer Zucker/Fett-Masse enthaltene Fett ist eine sogenannte nichtnewtonsche Substanz, d. h. daß sich Fett nicht wie eine zähflüssige Masse verhält. Wird die Zusammensetzung der zähflüssigen Zucker/Fett-Masse durch große Scherkräfte zerstört, wird Fett ausgeschieden, und damit ändert sich die Viskosität der Masse. Demnach kann bei der Verarbeitung einer Zukker/Fett-Masse durch die Sensiereinrichtung der erfindungsgemäßen Vorrichtung auch erkannt werden, ob die Zucker/Fett-Masse die erforderliche Zusammensetzung aufweist.

Eine vorteilhafte Weiterbildung der Vorrichtung sieht vor, daß die Meßgröße der Druck der Masse ist. Zur Erläuterung sei folgendes angemerkt: für den Durchfluß einer zähflüssigen Masse (newtonsche Flüssigkeit) durch ein Rohr gilt, daß

$$V' = [\pi \cdot R^4 \, (p_1 - p_2)] : (8 \cdot \eta \cdot 1),$$

wobei $V'$ der Volumenstrom der Masse, R der Rohrradius, $p_1$ der Druck der Masse am Rohranfang, $p_2$ der Druck der Masse am Rohrende, $\eta$ die dynamische Viskosität (Zähigkeit) der Masse und 1 die Länge des Rohrs ist (siehe Hering et al.: Physik für Ingenieure, Seite 122, VDI-Verlag, Düsseldorf, 1989). Umgeformt stellt sich diese Gleichung wie folgt dar:

$$\eta = [\pi \cdot R^4 \cdot (p_1 - p_2)] : (8 \cdot V' \cdot 1).$$

Dabei sind R und 1 konstant. Ferner entspricht $p_2$ dem Außendruck und ist ebenfalls als konstant zu betrachten. Geht man davon aus, daß durch die Zuführeinrichtung zumindest während einer bestimmten Zeit ein konstanter Volumenstrom $V'$ in das Rohr, d.h. die Düse zugeführt wird, so ist der Druck $p_1$ in der Masse direkt von der Viskosität $\eta$ abhängig. Ändert sich der Druck, so entspricht dies einer Änderung der Viskosität der Masse und damit beispielsweise einer Überalterung der Teigmasse.

Die Reibungskraft $F_R$ der Masse ist gleich der an den Rohrenden wirkenden Druckkraft $F_p$ (siehe ebenda):

$$F_R = F_p = (p_1 - p_2) \cdot \pi \cdot R^2.$$

Das bedeutet, daß mit steigendem Druck $p_1$ in der Masse auch die Reibungskraft $F_R$ zunimmt. Der Druck $p_1$ ist demnach ein Maß für die Reibungskraft $F_R$ der Masse. Die Reibungskraft $F_R$ ist vom Strömungswiderstand der Masse in der Düse und den Scherkräften in der Masse abhängig. Wie oben beschrieben, soll die Masse keinen großen Schwerkräften ausgesetzt werden. Mit Hilfe des ermittelten Drucks in der Masse kann nun die Reibungskraft in der Masse begrenzt und damit deren Schädigung verhindert werden.

Eine weitere oder alternative Ausgestaltung der Vorrichtung sieht vor, daß die Meßgröße die Strömungsgeschwindigkeit der Masse ist. Gemäß der oben genannten Gleichung

$$\eta = [\pi \cdot R^4 \cdot (p_1 - p_2)] : (8 \cdot V' \cdot 1)$$

ist die Viskosität $\eta$ abhängig vom Druck $p_1$ und vom Volumenstrom $V'$. Durch geeignete, den Druck $p_1$ begrenzende Mittel kann der in der Düse herrschende Druck $p_1$ konstant gehalten werden. Damit ist die Viskosität $\eta$ allein vom Volumenstrom $V'$ der Masse abhängig. Der Volumenstrom $V'$ einer inkompressiblen Flüssigkeit durch ein Rohr ist

$$V' = \pi \cdot R^2 \cdot v_m,$$

wobei $v_m$ die mittlere Strömungsgeschwindigkeit bzw. die Ausströmgeschwindigkeit der Masse ist. Das Ermitteln der Strömungsgeschwindigkeit der Masse ermöglicht es somit, sowohl den ausströmenden Volumenstrom, als auch eine Veränderung der Viskosität der Masse zu ermitteln.

Bei einer vorteilhaften Ausgestaltung der Erfindung ist die Sensiereinrichtung mit einer Steuereinrichtung gekoppelt und die Steuereinrichtung vermag in Abhängigkeit mindestens eines von der Sensiereinrichtung ermittelten Meßwerts die Zuführeinrichtung derart zu steuern, daß die Austrittsgeschwindigkeit der Masse aus der Düse nicht nur im wesentlichen konstant ist, sondern minimal schwankt. Eine gleichmäßige Austrittsgeschwindigkeit der Masse führt dazu, daß die hergestellten Backwaren oder Süßwaren gleichmäßige Form und Gewicht aufweisen.

Gemäß obiger Gleichungen gilt:

$$V' = \pi \cdot R^2 \cdot v_m = [\pi \cdot R^4 \, (p_1 - p_2)] : (8 \cdot \eta \cdot 1).$$

Die mittlere Strömungs- oder Austrittgeschwindigkeit $v_m$ kann demnach angepaßt werden, indem der Volumenstrom V' oder der Druck $p_1$ in der Düse durch die Zuführeinrichtung entsprechend angepaßt wird.

Gemäß einer vorteilhaften Weiterbildung der erfindungsgemäßen Vorrichtung umfaßt diese eine Transporteinrichtung zum Abführen der aus der Düse extrudierten Masse, wobei die Sensiereinrichtung mit der Steuereinrichtung gekoppelt ist, und die Steuereinrichtung in Abhängigkeit mindestens eines von der Sensiereinrichtung ermittelten Meßwerts die Transporteinrichtung derart zu steuern vermag, daß die Transportgeschwindigkeit der Transporteinrichtung der Austrittsgeschwindigkeit der Masse aus der Düse entspricht.

Bei bekannten Vorrichtungen ist die Transportgeschwindigkeit der Transporteinrichtung konstant, so daß eine ungleichmäßig austretende Masse beim Auftreffen auf die Transporteinrichtung von dieser gedehnt oder gestaucht wird. Gemäß der Erfindung sind die Austrittsgeschwindigkeit der Masse und deren Abführgeschwindigkeit gleich groß, so daß ein gleichmäßig geformter Massestrang entsteht.

Eine weitere vorteilhafte Gestaltung der Erfindung sieht vor, daß die Vorrichtung eine Dreheinrichtung mit mindestens einer drehbaren Düse umfaßt, die Sensiereinrichtung mit der Steuereinrichtung betrieblich gekoppelt ist, und die Steuereinrichtung in Abhängigkeit mindestens eines von der Sensiereinrichtung ermittelten Meßwertes die Dreheinrichtung derart zu steuern vermag, daß die Austrittsgeschwindigkeit der Masse aus der Düse minimal schwankt.

Bei einer drehbaren Düse schwankt im allgemeinen der Strömungswiderstand der Düse während des Drehens. Damit ändert sich die Reibungskraft $F_R$ der Masse. Gemäß obiger Gleichungen ist es jedoch möglich, die Strömungsgeschwindigkeit $v_m$ der Masse wunschgemäß anzupassen, indem der Druck $p_1$ in der Masse mittels der Zuführeinrichtung entsprechend angepaßt wird. Dies kann erfindungsgemäß durch eine Steuereinrichtung ausgeführt werden.

Um Backwaren mit mehreren Strängen zu erzielen, ist eine Zuführeinrichtung durch mehrere Kanäle mit einer Düse mit mehreren Ausströmöffnungen verbunden, und an den Kanälen oder den Ausströmöffnungen ist jeweils eine Sensiereinrichtung angeordnet.

Vorteilhaft abgestimmt ist die letzt genannte Vorrichtung, indem die Sensiereinrichtungen mit der Steuereinrichtung betrieblich gekoppelt sind, und die Steuereinrichtung in Abhängigkeit der von den Sensiereinrichtungen ermittelten Meßwerte die Zuführeinrichtung derart zu steuern vermag, daß die Austrittsgeschwindigkeiten der einzelnen Massen aus den Ausströmöffnungen relativ zueinander minimal schwanken. Durch derart gleichmäßig ausströmende Massen ist die Schichtung der hergestellten Back- oder Süßwaren konstant dick. Daher weisen die Waren eine besonders hohe Maß- und Gewichtsgenauigkeit auf.

Durch die erfindungsgemäße Vorrichtung können also Backwaren und Süßwaren mit erheblich höherer Gewichts- und Formgenauigkeit hergestellt werden, als dies bei bekannten Vorrichtungen der Fall ist.

Die beigefügte, schematische Zeichnung zeigt ein Ausführungsbeispiel der erfindungsgemäßen Vorrichtung zum Extrudieren plastischer Massen, das im folgenden näher erläutert wird.

Eine Vorrichtung 10 zum Extrudieren plastischer Massen umfaßt eine Zuführeinrichtung 12, die als Walzenpresse gestaltet ist und mittels der Massen, beispielsweise Teig- oder Zucker/Fett-Massen, zu einer Düse 14 zugeführt werden können. Unter der Düse 14 ist eine Transporteinrichtung 16 in Form eines Transportbandes angeordnet. Die ausströmenden Massen gelangen zu einem Strang geformt auf die Transporteinrichtung 16 und werden von dieser horizontal abgeführt. Es entstehen z.B. Backwaren, die in einem nachgeschalteten, nicht dargestellten Ofen gebacken werden.

Der Strang kann durch eine nicht dargestellte Schneid- oder Quetschvorrichtung geschnitten bzw. verschlossen werden, so daß auf der Transporteinrichtung 16 die geschnittenen Abschnitte des Strangs abgeführt werden. Ferner können mehrere Düsen 14 nebeneinander angeordnet sein, so daß die Kapazität der Vorrichtung entsprechend vergrößert ist.

Zum Fördern und Zuführen der Massen weist die Zuführeinrichtung 12 drei Paar Walzen 18a, 20a, 18b, 20b sowie 18c und 20c auf, die in bekannter und daher nicht weiter beschriebener Weise die Massen aus je einer Zuleitung 22a, 22b bzw. 22c zugeleitet bekommen. Die Walzen 18a bis 18c und 20a bis 20c weisen am Umfang verteilte Förderleisten auf, die je eine Masse in je einen Druckraum fördern (nicht dargestellt). Dabei schwankt der durch die Förderleisten erzeugte Förderdruck je nach Stellung der Förderleisten im Druckraum. Die Zuführeinrichtung erzeugt daher einen oszillierenden Förderdruck, der insbesondere mit der Fördergeschwindigkeit $v_a$, $v_b$ und $v_c$ der einzelnen Paar Walzen schwankt.

Beim Drehen der Walzen werden die Massen mit dem Förderdruck in Kanäle 24a, 24b bzw. 24c gefördert. Die Massen gelangen zur Düse 14, die als Dreifachdüse ausgebildet ist und drei nicht dargestellte Ausströmöffnungen aufweist. Die Ausströmöffnungen sind derart angeordnet, daß die ausströmende Masse einen nicht dargestellten Strang bildet. Die Düse 14 ist mittels einer Dreheinrichtung 26 mit einer Drehgeschwindigkeit $V_d$ drehbar. Die Düse 14 weist nicht dargestellte, asymmetrisch angeordnete Verbindungs- und Ringkanäle auf, damit die Massen auch beim Drehen der Düse 14 von den Kanälen 24a bis 24c zu den Ausströmöffnungen strömen können. Beim Drehen der Düse 14 werden die einzelnen Verbindungs- und Ringkanäle unterschiedlich durchströmt, so daß der Strömungswiderstand der Massen dadurch schwankt, insbesondere oszilliert diese Schwankung in Abhängigkeit der Drehgeschwindigkeit $v_d$ der Düse 14.

Die Walzen 18a bis 18c und 20a bis 20c sind mittels je eines Zuführantriebs antreibbar, die durch fremdbelüftete Elektromotoren 28a, 28b bzw. 28c getrieben werden. Dabei sind an den Elektromotoren 28a bis 28c je ein Temperaturfühler 30a, 30b bzw. 30c und je ein Handschalter 32a, 32b bzw. 32c für einen manuellen Betrieb angeordnet. Stromzuführungen der Elektromotoren 28a bis 28c sind mit je einem Frequenmwandler 34a, 34b bzw. 34c und je einer Drehzahlregelung 36a, 36b bzw. 36c versehen, mittels denen die Drehzahl der Elektromotoren 28a bis 28c und damit die Fördergeschwindigkeiten $v_a$, $v_b$ bzw. $v_c$ veränderbar sind.

Die Dreheinrichtung 26 weist einen Drehantrieb auf, der mittels eines Elektromotors 38 antreibbar ist. Am Elektromotor 38 sind ein Temperaturfühler 40 und ein Handschalter 42 vorgesehen. Die Drehgeschwindigkeit $v_d$ des Elektromotors 38 ist mittels eines Frequenzwandlers 44 und einer Drehzahlregelung 46 anpaßbar.

Die Transporteinrichtung 16 umfaßt einen Transportantrieb, der mittels eines Elektromotors 48 mit nicht dargestelltem Fremdlüfter, Temperaturfühler 50 und Handschalter 52 antreibbar ist. Zum Regeln der Drehzahl des Elektromotors 48 und damit einer Transportgeschwindigkeit $v_t$ des Transportbandes, weist der Elektromotor 48 einen Drehgeber 54 (Encoder), einen Frequenzwandler 56 und eine Drehzahlregelung 58 auf.

An den Kanälen 24a bis 24c sind je ein Drucksensor 60a, 60b bzw. 60c angeordnet, die als Sensiereinrichtungen den in den jeweiligen Kanälen 24a bis 24c herrschenden Druck $p_a$, $p_b$ bzw. $p_c$ der extrudierten Massen zu ermitteln vermögen.

Die Frequenzwandler 34a, 34b, 34c, 44 und 56 sowie die Drucksensoren 60a, 60b und 60c sind durch Leitungen (nur teilweise dargestellt) mit einer Steuereinrichtung 62 betrieblich gekoppelt. Die Steuereinrichtung 62 ist als programmierbare Logigschaltung gestaltet und kann die Förder- bzw. Zuführgeschwindigkeiten $v_a$, $v_b$ und $v_c$ der Zuführeinrichtung 12, die Drehgeschwindigkeit $v_d$ der Dreheinrichtung 26 und die Transportgeschwindigkeit $v_t$ der Transporteinrichtung 16 mittels der Frequenzwandler 34a bis 34c, 44 bzw. 56 ändern.

Dabei werden von der Steuereinrichtung 62 die von den Drucksensoren 60a bis 60c ermittelten Drücke $p_a$, $p_b$ und $p_c$ verarbeitet.

Ein erstes Steuerverfahren gemäß dem Stand der Technik sieht hierbei vor, daß die Steuereinrichtung 62 die Zuführgeschwindigkeiten $v_a$, $v_b$ und $v_c$ so anpaßt, daß die Drücke $p_a$, $p_b$ und $p_c$ konstant sind, womit bei gleichbleibender Viskosität der Massen deren Austrittsgeschwindigkeit minimal schwankt.

Ein zweites, erfindungsgemäßes Steuerverfahren sieht vor, daß die Drehgeschwindigkeit $v_d$ an die Fördergeschwindigkeit $v_a$ bis $v_c$ angepaßt wird, damit sich der schwankende Förderdruck der Zuführeinrichtung 12 und der schwankende Strömungswiderstand der Düse 14 gegenseitig aufheben. Bei Umlauf von n Förderleisten einer Walze während der Zeit t ist die Drehgeschwindigkeit $v_d$ so gewählt, daß die Düse 14 sich n-mal oder mit einem Vielfachen von n dreht.

Ein drittes, erfindungsgemäß weitergebildetes Steuerverfahren ist so gestaltet, daß die Transportgeschwindigkeit $v_t$ der Austrittsgeschwindigkeit $v_s$ des ausströmenden Strangs angeglichen wird, so daß der Strang beim Auftreffen auf das Transportband nicht gestreckt oder gestaucht wird.

Bei einem vierten, erfindungsgemäß weitergebildeten Steuerverfahren sind die Fördergeschwindigkeiten $v_a$ bis $v_c$ so aufeinander abgestimmt, daß in den einzelnen Kanälen 24a bis 24c je nach Viskosiät der einzelnen Massen derartige Drücke $p_a$, $p_b$ und $p_c$ herrschen, daß die Austrittsgeschwindigkeiten der Massen relativ zueinander nur minimal schwanken.

Alternativ können die Drucksensoren 60a bis 60c als Strömungsgeschwindigkeitsmesser (Flowmeter) ausgestaltet sein, wobei die oben genannten Steuerverfahren an die Meßgröße Strömungsgeschwindigkeit entsprechend angepaßt werden, so daß sich analoge Steuerergebnisse ergeben.

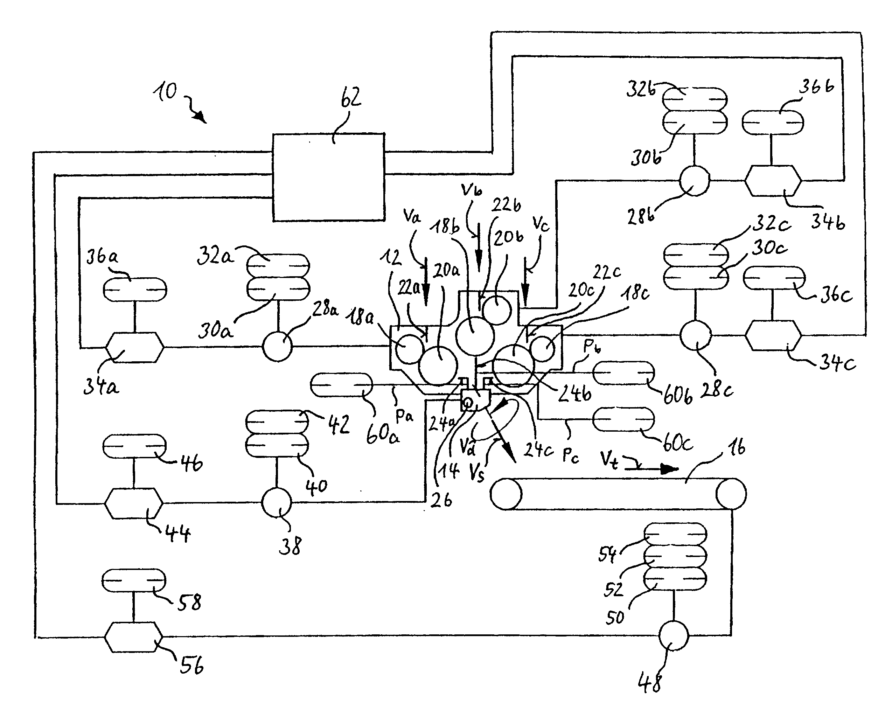

### Patentansprüche

1. Vorrichtung (10) zum Extrudieren plastischer Massen, mit mindestens einer Zuführeinrichtung (12) zum Zuführen einer Masse durch einen Kanal (24a; 24b; 24c) zu einer Düse (14), wobei am Kanal (24a; 24b; 24c) oder an der Düse (14) eine Sensiereinrichtung (60a; 60b; 60c) zum Ermitteln mindestens einer mit der Viskosität der Masse in Verbindung stehenden Meßgröße ($p_a$; $p_b$; $p_c$) angeordnet ist, und wobei die Zuführeinrichtung (12) und die Düse (14) derart gestaltet sind, dass die Zuführeinrichtung (12) einen während der Zeit mit einer Frequenz oszillierenden Förderdruck aufweist,
   **dadurch gekennzeichnet, dass**
   die Düse (14) einen mit der gleichen Frequenz oszillierenden Strömungswiderstand aufweist.

2. Vorrichtung nach Anspruch 1,
   **dadurch gekennzeichnet, daß** die Meßgröße der Druck ($p_a$; $p_b$; $p_c$) der Masse ist.

3. Vorrichtung nach Anspruch 1 oder 2,
   **dadurch gekennzeichnet, daß** die Meßgröße die Strömungsgeschwindigkeit der Masse ist.

4. Vorrichtung nach Anspruch 1, 2 oder 3,
   **dadurch gekennzeichnet, daß**

   - die Sensiereinrichtung (60a; 60b; 60c) mit einer Steuereinrichtung (62) betrieblich gekoppelt ist und
   - die Steuereinrichtung (62) in Abhängigkeit mindestens eines von der Sensiereinrichtung (60a; 60b; 60c) ermittelten Meßwerts die Zuführeinrichtung (12) derart zu steuern vermag, daß die

Austrittsgeschwindigkeit ($v_s$) der Masse aus der Düse (14) minimal schwankt.

5. Vorrichtung nach Anspruch 1, 2, 3 oder 4, **dadurch gekennzeichnet, daß**

- die Vorrichtung (10) eine Transporteinrichtung (16) zum Abführen der aus der Düse (14) extrudierten Masse umfaßt,
- die Sensiereinrichtung (60a; 60b; 60c) mit einer/der Steuereinrichtung (62) betrieblich gekoppelt ist, und
- die Steuereinrichtung (62) in Abhängigkeit mindestens eines von der Sensiereinrichtung (60a; 60b; 60c) ermittelten Meßwerts die Transporteinrichtung (16) derart zu steuern vermag, daß die Transportgeschwindigkeit ($v_t$) der Transporteinrichtung (16) der Austrittsgeschwindigkeit ($v_s$) der Masse aus der Düse (14) entspricht.

6. Vorrichtung nach Anspruch 1, 2, 3, 4 oder 5, **dadurch gekennzeichnet, daß**

- die Vorrichtung (10) eine Dreheinrichtung (26) mit mindestens einer drehbaren Düse (14) umfaßt,
- die Sensiereinrichtung (60a; 60b; 60c) mit einer/der Steuereinrichtung (62) betrieblich gekoppelt ist, und
- die Steuereinrichtung (62) in Abhängigkeit mindestens eines von der Sensiereinrichtung (60a; 60b; 60c) ermittelten Meßwertes die Dreheinrichtung (26) derart zu steuern vermag, daß die Austrittsgeschwindigkeit ($v_s$) der Masse aus der Düse (16) minimal schwankt.

7. Vorrichtung nach Anspruch 1, 2, 3, 4, 5 oder 6, **dadurch gekennzeichnet, daß**

- eine Zuführeinrichtung (12) durch mehrere Kanäle (24a, 24b, 24c) mit einer Düse (14) mit mehreren Ausströmöffnungen verbunden ist, und
- jeweils eine Sensiereinrichtung (60a, 60b, 60c) an den Kanälen (24a, 24b, 24c) oder an den Ausströmöffnungen der Düse (14) angeordnet ist.

8. Vorrichtung nach Anspruch 7, **dadurch gekennzeichnet, daß**

- die Sensiereinrichtungen (60a, 60b, 60c) mit einer/der Steuereinrichtung (62) betrieblich gekoppelt sind, und
- die Steuereinrichtung (62) in Abhängigkeit der von den Sensiereinrichtungen (60a, 60b, 60c) ermittelten Meßwerte die Zuführeinrichtung (12) derart zu steuern vermag, daß die Austrittsgeschwindigkeiten der einzelnen Massen aus den Ausströmöffnungen der Düse (14) relativ zueinander minimal schwanken.

**Claims**

1. Device (10) for extruding plastic compounds, having at least one feed instrument (12) for feeding a compound through a channel (24a; 24b; 24c) to a die (14), wherein a sensing instrument (60a; 60b; 60c) is provided at the channel (24a; 24b; 24c) or at the die (14) in order to determine at least one measured variable ($P_a$; $P_b$; $P_c$) related to the viscosity of the compound, and wherein the feed instrument (12) and the die (14) are configured in such a way that the feed instrument (12) has a delivery pressure which oscillates over time at a frequency, **characterised in that**
the die (14) has a flow resistance which oscillates at the same frequency.

2. Device according to Claim 1, **characterised in that** the measured variable is the pressure ($p_a$; $p_b$; $p_c$) of the compound.

3. Device according to Claim 1 or 2, **characterised in that** the measured variable is the flow rate of the compound.

4. Device according to Claim 1, 2 or 3, **characterised in that**

- the sensing instrument (60a; 60b; 60c) is operatively coupled to a control instrument (62), and
- the control instrument (62) is capable of controlling the feed instrument (12), as a function of at least one measured value determined by the sensing instrument (60a; 60b; 60c), in such a way that the exit velocity ($v_s$) of the compound from the die (14) fluctuates minimally.

5. Device according to Claim 1, 2, 3 or 4, **characterised in that**

- the device (10) comprises a transport instrument (16) for removing the compound extruded from the die (14),
- the sensing instrument (60a; 60b; 60c) is operatively coupled to a/the control instrument (62), and
- the control instrument (62) is capable of controlling the transport instrument (16), as a function of at least one measured value determined by the sensing instrument (60a; 60b; 60c), in such a way that the transport velocity ($v_t$) of the transport instrument (16) corresponds to the

exit velocity ($v_s$) of the compound from the die (14).

6. Device according to Claim 1, 2, 3, 4 or 5, **characterised in that**

   - the device (10) comprises a rotary instrument (26) having at least one rotatable die (14),
   - the sensing instrument (60a; 60b; 60c) is operatively coupled to a/the control instrument (62), and
   - the control instrument (62) is capable of controlling the rotary instrument (26), as a function of at least one measured value determined by the sensing instrument (60a; 60b; 60c), in such a way that the exit velocity ($v_s$) of the compound from the die (14) fluctuates minimally.

7. Device according to Claim 1, 2, 3, 4, 5 or 6, **characterised in that**

   - a feed instrument (12) is connected through a plurality of channels (24a; 24b; 24c) to a die (14) having a plurality of outlet openings, and
   - a sensing instrument (60a; 60b; 60c) is in each case arranged at the channels (24a; 24b; 24c) or at the outlet openings of the die (14).

8. Device according to Claim 7, **characterised in that**

   - the sensing instruments (60a; 60b; 60c) are operatively coupled to a/the control instrument (62), and
   - the control instrument (62) is capable of controlling the feed instrument (12), as a function of the measured values determined by the sensing instruments (60a; 60b; 60c), in such a way that the exit velocities of the individual compounds from the outlet openings of the die (14) fluctuate minimally relative to one another.

**Revendications**

1. Dispositif (10) pour extruder des masses plastiques, avec au moins un dispositif d'alimentation (12) pour l'acheminement d'une masse par un canal (24a, 24b, 24c) à une filière (14), un dispositif capteur (60a, 60b, 60c) étant disposé sur le canal (24a, 24b, 24c) ou sur la filière (14) pour la détermination d'au moins une grandeur de mesure ($p_a$, $p_b$, $p_c$) qui se trouve en relation avec la viscosité de la masse, pour lequel le dispositif d'alimentation (12) et la filière (14) sont configurés de telle sorte que le dispositif d'alimentation (12) présente une pression de transport qui oscille au cours du temps avec une fréquence,

**caractérisé en ce que**
la filière (14) présente une résistance à l'écoulement qui oscille avec la même fréquence.

2. Dispositif selon la revendication 1, **caractérisé en ce que** la grandeur de mesure est la pression ($p_a$, $p_b$, $p_c$) de la masse.

3. Dispositif selon la revendication 1 ou 2, **caractérisé en ce que** la grandeur de mesure est la vitesse d'écoulement de la masse.

4. Dispositif selon la revendication 1, 2 ou 3, **caractérisé en ce que**

   - le dispositif capteur (60a, 60b, 60c) est couplé du point de vue de son fonctionnement à un dispositif de commande (62) et
   - **en ce que** le dispositif de commande (62) est en mesure de commander le dispositif d'alimentation (12) en fonction d'au moins une valeur de mesure déterminée par le dispositif capteur (60a, 60b, 60c), de telle sorte que la vitesse de sortie ($v_s$) de la masse hors de la filière (14) fluctue de façon minimale.

5. Dispositif selon la revendication 1, 2, 3 ou 4, **caractérisé en ce que**

   - le dispositif (10) comprend un dispositif de transport (16) pour évacuer la masse extrudée par la filière (14),
   - **en ce que** le dispositif capteur (60a, 60b, 60c) est couplé du point de vue de son fonctionnement à un/au dispositif de commande (62), et
   - **en ce que** le dispositif de commande (62) est en mesure de commander le dispositif de transport (16) en fonction d'au moins une valeur de mesure déterminée par le dispositif capteur (60a, 60b, 60c) de telle sorte que la vitesse de transport ($v_t$) du dispositif de transport (16) corresponde à la vitesse de sortie ($v_s$) de la masse hors de la filière (14).

6. Dispositif selon la revendication 1, 2, 3, 4 ou 5, **caractérisé en ce que**

   - le dispositif (10) comprend un dispositif de rotation (26) avec au moins une filière tournante (14),
   - **en ce que** le dispositif capteur (60a, 60b, 60c) est couplé du point de vue de son fonctionnement à un/au dispositif de commande (62), et
   - **en ce que** le dispositif de commande (62) est en mesure de commander le dispositif de rotation (26) en fonction d'au moins une valeur de mesure déterminée par le dispositif capteur (60a, 60b, 60c) de telle sorte que la vitesse de

sortie ($v_s$) de la masse hors de la filière (16) fluctue de façon minimale.

7. Dispositif selon la revendication 1, 2, 3, 4, 5, ou 6,
   **caractérisé en ce qu'**

   - un dispositif d'alimentation (12) est relié par plusieurs canaux (24a, 24b, 24c) à une filière (14) avec plusieurs orifices de sortie, et
   - **en ce qu'**un dispositif capteur (60a, 60b, 60c) est disposé respectivement sur les canaux (24a, 24b, 24c) ou sur les orifices de sortie de la filière (14).

8. Dispositif selon la revendication 7,
   **caractérisé en ce que**

   - les dispositifs capteurs (60a, 60b, 60c) sont couplés du point de vue de leur fonctionnement à un/au dispositif de commande (62), et
   - **en ce que** le dispositif de commande (62) est en mesure de commander le dispositif d'alimentation (12) en fonction des valeurs de mesure déterminées par les dispositifs capteurs (60a, 60b, 60c) de telle sorte que les vitesses de sortie des différentes masses hors des orifices de sortie de la filière (14) fluctuent de façon minimale les unes par rapport aux autres.